# EUROPEAN PATENT APPLICATION

(11) **EP 3 343 420 A1**
(43) Date of publication of application: **04.07.2018**
(21) Application number: 17163393.6
(22) Date of filing: 28.03.2017
(51) Int. Cl.: G06F 21/55, G06Q 10/06, H04L 29/06, G06Q 30/00, G06Q 50/22

(54) **VALIDATING COMPLIANCE OF AN INFORMATION TECHNOLOGY ASSET OF AN ORGANIZATION TO A REGULATORY GUIDELINE**

(30) Priority: 30.12.2016 US 201615395363
(71) Applicant: Wipro Limited, 560 035 Karnataka (IN)
(72) Inventor: RAVI, Parameswaran Radhika, Madurai - 625016 Tamil Nadu (IN)
(74) Representative: Finnegan Europe LLP

(57) **Abstract**

This disclosure relates to system and method for validating compliance of an information technology (IT) asset of an organization to a regulatory guideline. In one embodiment, a method is provided for validating the compliance of the IT asset to a regulatory guideline. The method comprises accessing raw data from a plurality of data sources, wherein the raw data comprises at least one of an operation data, an IT asset data, a regulatory intelligence data, and a regulatory reference data, processing the raw data to extract one or more regulatory parameters, analyzing the one or more regulatory parameters using one or more artificial intelligence computing processes to assess at least one of a regulatory risk and a corresponding regulatory impact, and validating the compliance of the IT asset to the regulatory guideline based on the at least one of the regulatory risk and the corresponding regulatory impact.

## Description

### Technical Field

This disclosure relates generally to regulatory compliance, and more particularly to a method and system for validating compliance of an information technology (IT) asset of an organization to a regulatory guideline.

### Background

Information technology (IT) systems have become ubiquitous in today's world and are increasingly deployed in many organizations across sectors such as finance, life science, aeronautics, and so forth. Many of these organizations are heavily regulated in accordance with varied regulatory guidelines due to criticality of their business, and impact that they may have because of non-compliance. Thus, while deploying the IT systems, the organizations typically need to ensure that the deployed IT systems work according to the predefined regulations, rules, laws, and industry standards, and provide documented proof for the same. As will be appreciated, various types of IT systems comes with diversified architectures. Deployment of such diverse IT systems may therefore trigger risk of non-compliance of various regulatory guidelines.

For example, over the last few years, life science industry has deployed advance IT systems, particularly at their research and development (R&D) center for drug discovery, drug development, clinical research, and so forth. These IT systems handles a lot of sensitive information that are governed by various regulations, rules, laws, and industry specific standards. The life science organizations therefore need to ensure that the deployed IT systems conform to the predefined regulations, rules, laws, and industry specifications. Additionally, life science organizations have to work in consonance with various life science industries regulations like U.S. food and drug administration (USFDA), U.S. drug regulatory authority, binding corporate agreements, corporate integrity agreements, and so forth. The scenario becomes more pronounced when aligning deployed IT systems and validating their compliance as per good automated manufacturing practice (GAMP) 5 guidelines along with the other such regulatory mandates since GAMP 5 guidelines do not clearly support the virtualization or other new/futuristic technologies, methods, devices and application interfaces, virtual infrastructure (like SDX's), and so forth.

In order to comply with new and evolving regulatory requirements, companies are turning more and more to technology so as to mitigate risks of noncompliance. However, logic used in existing approach to validate the IT systems according to regulatory requirements incurs heavy manual effort and can present accuracy challenges. For example, the GAMP 5 validation is done manually and is therefore prone to manual error and inaccuracy. Further, existing approaches are mostly limited to quality management systems that allows managing documents and workflows with human intervention. This may lead to incorrectly validating the IT assets in life science organization, which in turn could attract the regulatory body's attention and increase the possibility of drug rejection.

### SUMMARY

In one embodiment, a method for validating compliance of an information technology (IT) asset of an organization to a regulatory guideline is disclosed. In one example, the method comprises accessing raw data from a plurality of data sources. The raw data comprises at least one of an operation data, an IT asset data, a regulatory intelligence data, and a regulatory reference data. The method further comprises processing the raw data to extract one or more regulatory parameters. The method further comprises analyzing the one or more regulatory parameters using one or more artificial intelligence computing processes to assess at least one of a regulatory risk and a corresponding regulatory impact. The method further comprises validating the compliance of the IT asset to the regulatory guideline based on the at least one of the regulatory risk and the corresponding regulatory impact.

In one embodiment, a system for validating compliance of an information technology (IT) asset of an organization to a regulatory guideline is disclosed. In one example, the system comprises at least one processor and a memory communicatively coupled to the at least one processor. The memory stores processor-executable instructions, which, on execution, cause the processor to access raw data from a plurality of data sources. The raw data comprises at least one of an operation data, an IT asset data, a regulatory intelligence data, and a regulatory reference data. The processor-executable instructions, on execution, further cause the processor to process the raw data to extract one or more regulatory parameters. The processor-executable instructions, on execution, further cause the processor to analyze the one or more regulatory parameters using one or more artificial intelligence computing processes to assess at least one of a regulatory risk and a corresponding regulatory impact. The processor-executable instructions, on execution, further cause the processor to validate the compliance of the IT asset to the regulatory guideline based on the at least one of the regulatory risk and the corresponding regulatory impact.

In one embodiment, a non-transitory computer-readable medium storing computer-executable instructions for validating compliance of an information technology (IT) asset of an organization to a regulatory guideline is disclosed. In one example, the stored instructions, when executed by a processor, cause the processor to perform operations comprising accessing raw data from a plurality of data sources. The raw data comprises at least one of an operation data, an IT asset data, a regulatory intelligence data, and a regulatory reference data. The operations further comprise processing the raw data to extract one or more regulatory parameters. The operations further comprise analyzing the one or more regulatory parameters using one or more artificial intelligence computing processes to assess at least one of a regulatory risk and a corresponding regulatory impact. The operations further comprise validating the compliance of the IT asset to the regulatory guideline based on the at least one of the regulatory risk and the corresponding regulatory impact.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates an architecture of an exemplary validation system for validating compliance of an information technology (IT) asset of an organization to a regulatory guideline in accordance with some embodiments of the present disclosure.
**FIG. 2** is a flow diagram of an exemplary process overview for validating compliance of an IT asset to a regulatory guideline in accordance with some embodiments of the present disclosure.
**FIG. 3** is a flow diagram of an exemplary process for validating compliance of an IT asset to a regulatory guideline in accordance with some embodiments of the present disclosure.
**FIG. 4** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Further, exemplary embodiments are generally directed to validating compliance of an information technology (IT) asset to a regulatory guideline. Such techniques may be useful in a variety of organizations across sectors such as finance, life science, aeronautics, and so forth. Though the present discussion provides examples generally in context of life science industry, one of ordinary skill in the art will readily comprehend that the application of discussed techniques in other contexts, such as for banking industry, financial service industry, food processing industry, and so forth, is well within the scope of the present invention.

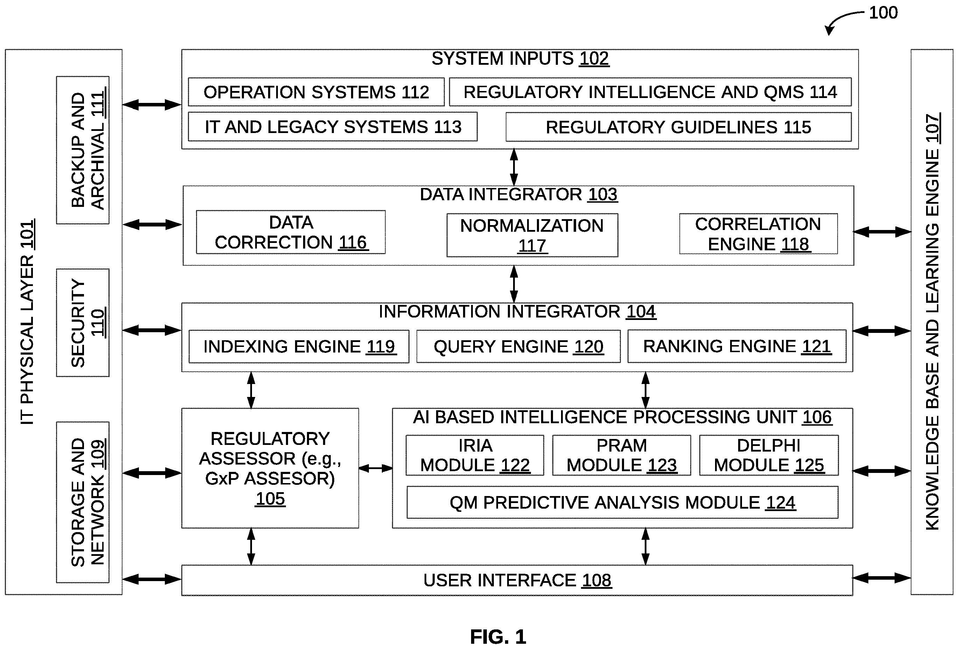

Referring now to **FIG. 1****,** an architecture of an exemplary validation system 100 for validating compliance of an IT asset of an organization to a regulatory guideline is illustrated, in accordance with some embodiments of the present disclosure. The architecture depicts various components and modules that work together to implement the overall system 100. The architecture further depicts a mapping of functionality into hardware and software components, interrelationships among components, inputs and outputs, internal transactions, built in artificial intelligence (AI), and human interactions with each of these components. The overall architectural considerations model defines how the technical requirements like security, storage, network, accessibility, transactions on the transactional layer, data communications, user access and graphical user interface (GUI) considerations, and backup and archival have been addressed by the architecture. It should be noted that meta-modeling is deployed to describe various components and modules of the architecture in detail.

In illustrated embodiments, the exemplary validation system 100 is a good (anything) practice (GxP) validation system (e.g., good automated manufacturing practice (GAMP) validation system) for validating compliance of IT assets of an organization (e.g., life science organization) according to GxP guidelines (e.g., GAMP guidelines). The system 100 comprises a IT physical layer 101, a system inputs 102, a data integrator 103, an information integrator 104, a regulatory assessor 105, an AI based intelligence processing unit 106, a knowledge base and learning engine 107, and a graphical user interface 108. The IT physical layer 101 further comprises a storage and network subsystem 109, a security subsystem 110, and a backup and archival subsystem 111.

The storage and network subsystem 109 includes overall set of hardware and software components required to facilitate storage and communication for the system 100. It should be noted that the storage and/or networks subsystem 109 may be built with a variety of commercially available products and solutions in the market space. In some embodiments, the storage and/or network subsystem 109 may be designed in alignment to the principles of interoperability, security and integrity, availability, and scalability. For example, the GxP system handles GxP data from various types of systems (e.g., e-mail servers, database systems) while working with multiple, complex management interfaces. Thus, interoperability may be considered as an important aspect of designing the storage and/or network subsystem 109. Further, the data handled by the GxP system is typically validated data which are highly sensitive. Thus, data integrity should be protected using masking techniques, or any other data protection techniques so as to align to changing needs. Additionally, the data growth in the GxP system is unpredictable. The storage subsystem 109 should therefore be suitably scalable. Further, the network and/or storage subsystem 109 may be adapted to take care of the data stewardship.

It should be noted that the system 100 typically includes a server that may be a computer program or a device that provides functionality for other programs components in the system 100. For example, in some embodiments, the GxP system includes a web server and offer dedicated hosting services as the GxP data is a highly sensitive secured data. Various upgrades including those related to software updates, reboots, security patches, and operating system may be performed for the server as for any other servers that are maintained by the organization.

The security subsystem 110 is an important aspect for the systems 100. In particular, the security infrastructure around the storage and network subsystem 109 and the data stored on it is of particular importance as the system 100 (e.g., GxP system) deals with highly sensitive data (e.g., GxP validated data). In some embodiments, the data may be encrypted while stored in the storage and network subsystem 109 as well as during data transmission. In some embodiments, the system 100 may employ storage area networks (SANs) and network attached storage (NAS), authentication procedures, encryption keys, and access controls so as to restrict unauthorized access to validated data and ensure data security.

The backup and archival subsystem 111 ensures disaster recovery and data continuity, while ensuring that the availability of the stored data doesn't impinge on security if one needs to access the data at short notice. Additionally, the backup and archival subsystem 111 enables searching through data for retrieval of relevant files as and when they are needed. Since the data handled by the system 100 is subject to compliance audits, data archival is an important aspect of the system 100.

The system inputs 102 are the information or raw data received by the system 100 from a plurality of data sources. For example, the system inputs 102 may include, but is not limited to, an operation data from various operation systems 112 (e.g., clinical data source), an IT asset data from various IT and legacy systems 113, a regulatory intelligence data from regulatory intelligence gathering systems and/or quality management systems 114, and a regulatory reference data from regulatory guidelines 115.

For example, in some embodiments, the GAMP system may receive raw clinical data as the operation data from clinical sources. The compliance of the GAMP system to regulatory mandates (i.e, GAMP guideline) may be typically derived from the clinical data source. The clinical data is data for clinical usage and may include, but is not limited to, socioeconomic data (e.g., ethnicity), biomedical data, genetic data, environmental (e.g., geography, food, climate) data, medical data (e.g., individual health status and health behaviors), clinical research data (e.g., research outcomes), financial data, and expense data. These data may be typically stored in a variety of electronic health records (EHRs), personal medical records, disease registries, and other databases which are further used or processed for various R&D activities. These data are typically classified as sensitive and are maintained in a validated environment of a validated system. As will be appreciated, regulatory compliance, security, and privacy is an imperative part of managing these data.

The IT asset data includes, but is not limited to, type of operating systems, proprietary computing process (e.g., software), third-party computing process (e.g., commercial off-the-shelf (COTS) software), database, information security process, information backup process, network infrastructure, and storage infrastructure. Further, the IT asset includes, but is not limited to, research and development systems, laboratory information management systems (LIMS), regulatory submission and management systems, technical operation systems, manufacturing execution systems (MES), enterprise resource planning (ERP) systems (e.g., SAP, JD Edwards), quality management system (QMS), sales and marketing system, promotion compliance system, finance system, legal system, and customer engagement system (e.g., patient engagement system). As will be appreciated, each of these systems may be governed by specific set of regulations and guidance which are further subjected to legal statutes and geo-specific compliance requirements. For example, the inputs to the GAMP system may be additionally from one or many of the following systems: software in clinical trials development at the R&D systems, laboratory informatics, regulatory submissions & management (NDA, ECTD tools) and allied COTS systems. Further, it should be noted that the GAMP system may consider each of these variates, group under abelian property of groupings and use multi-dimension, multi clustering properties to further process information.

The regulatory intelligence is gathering and analyzing regulatory information with respect to change in at least one of a law, a regulation, a directive, and a guidance in the industry. In some embodiments, the regulatory intelligence data is an input to the quality management systems (QMS) which has the specific set of policies, processes, and procedures required for planning and execution in the core area of the company. Thus, regulatory intelligence data comprises such gather and/or analyzed information from the regulatory intelligence gathering systems and/or the quality management systems 114. The regulatory intelligence data provides information on any changes to the existing regulations across industry so that the companies can process and abide by the regulations.

The regulatory reference data comprises any predefined regulations, rules, laws, guidelines, and industry standards with respect to the industry to which the organization belongs from regulatory guidelines 115. For example, the life sciences industry is among the most heavily regulated. The major regulations and guidelines provided by regulatory bodies across the world include, but are not limited to, international society for pharmaceutical engineering (ISPE) GAMP guidelines, U.S. food and drug administration (USFDA) guidelines, international organization for standardization (ISO) guidelines, and international council on harmonization of technical requirements for registration of pharmaceuticals for human use (ICH) guidelines.

GAMP guidelines for validation of automated systems in pharmaceutical manufacture describes a set of principles and procedures that help ensure that pharmaceutical products have the required quality. GAMP 5 has four categories as of software grouping: Category 1 for infrastructure software including operating systems, database managers, etc., Category 3 for non-configurable software including, commercial off the shelf software (COTS), laboratory instruments/software, Category 4 for configured software including, LIMS, SCADA, DCS, CDS, etc., and category5 for bespoke software. It should be noted that Category 2 from GAMP 4 has been removed.

USFDA is a body that is responsible for protecting the public health by assuring the safety, efficacy, and security of human and veterinary drugs, biological products, medical devices, food products, cosmetics, and products that emit radiation. This is aligned to US department of health and human services and offer guidance for food and drug administration.

ISO is an independent, non-governmental international organization with a membership of 163 national standards bodies. The organization promotes worldwide proprietary, industrial, and commercial standards. Many of the life sciences guidelines implementations are verified by ISO audit methods. Some of the ISO standards are directly associated and applicable to life sciences Industry (e.g. ISO 13485 for medical devices industry).

ICH harmonized tripartite guideline has the participation of regulatory authorities of Europe, Japan, and the United States. Aligned to good clinical practices these guidelines ensure and aid stability analysis, less testing time, identification of impurities, and quality risk management.

The data integrator 103 performs data integration by combining data from several disparate sources, which are stored using various technologies. The data integrator 103 comprises a data correction module 116 for validating and/or correcting the raw data, a data normalization module 117 for normalizing the raw data, and a data correlation engine 118 for correlating the raw data. The data integrator 103 provides an integrated data by correcting and/or normalizing the data. Upon data integration, the data integrator 103 correlates the integrated data to extract the one or more regulatory parameters.

The information integrator 104 comprises an indexing engine 119, a query engine 120, and a ranking engine 121. The extracted key information (e.g., regulator parameters) may be indexed and stored by the indexing engine 119 for subsequent search and retrieval. It should be noted that the indexing engine 119 also considers data security into account while storing data across different geographies. The indexing engine 119 fetches data based on Boolean operators such as AND, OR, NOT, XOR, etc. specified by users in their search query, thereby providing quick access to information. The indices created by the indexing engine 119 are distributed with mechanism of fail over and disaster recovery.

The query engine 120 enable user to search required data captured from internal as well as external data sources. Additionally, it enables user to use Boolean operators such as AND, OR, NOT, XOR, etc. to further refine search. Apart from providing Boolean operators, the query engine 120 provides features so as to enable the user to have personalized settings while searching the result. The query engine 120 in conjunction with the indexing engine 119 fetches required data from distributed storage and also incorporates intelligence to suggest user while searching.

The ranking engine 121 ranks extracted key information (e.g., regulatory parameters) based on various ranking parameters to provide a ranking of result of the query engine 120. The ranking parameters may include, but are not limited to, a geographical risk, a type of risk according to the regulatory guideline (e.g., GxP guideline) after analyzing the IT asset, a number of incidents corresponding to a particular IT asset, commonality of particular IT assets in non-compliance of GxP guidelines based on geo-specific laws, and a historical compliance detail of the IT asset.

The regulatory assessor 105 performs regulatory assessment of the raw data based on one or more regulator parameters. In some embodiments, the regulatory assessor 105 performs regulatory assessment based on parameters including, but not limited to, a technology, an industry requirement, an intent of use, and a criticality. Additionally, the regulatory assessor 105 may present the regulatory assessment for manual validation. In some embodiments, the regulatory assessor 105 may be a GxP assessor that queries the data sources to access the system details such as GxP criticality, infrastructure, and so forth. The GxP assessor then performs assessment of the system based on evaluation of the information with respect to the GxP guidelines. For example, in some embodiments, the GxP assessor is a query based - GAMP 5 category assignor that provides GAMP 5 category for systems based on evaluation of the information with respect to GAMP 5 guidelines. In some embodiments, the assessment may be performed by employing principles of Delphi method where the auto suggestions may be validated manually for accurate category assignments. In some embodiments, distributed queries may be deployed to provide distributed concurrent access to multiple data sources. Therefore, each system is assessed on multi-dimension aspects such as technology, industry requirement, intent of use, and criticality. The output generated by the regulatory assessor 105 is one of the primary input to the AI based intelligence processing unit 106.

The AI based intelligence processing unit 106 is an integrator that adds knowledge and reasoning to categorization and compliance management. The AI is based on rule-based system, which works on sets of rules to assess risks, develop controls, and ratify risks to manage compliance. The AI based intelligence processing unit 106 comprises following sub-modules: industry and regulatory impact assessment (IRIA) module 122, a proactive regulatory risk assessment and management (PRAM) module 123, a qualitative methods (QM) predictive and prescriptive analysis module 124, and a Delphi module 125.

The IRIA module 122 performs the industry and regulatory impact assessments. The IRIA module 122 derives potential industry and compliance adherence mandates, the risks associated with a system 100, and the strategies for risk mitigation and compliance adherence. For example, in some embodiments, the regulatory assessments are the GxP assessment done on the GxP systems so as to identify the criticality of validation and security. As will be appreciated, the assessment enables informed risk and compliance decision making as the industry, technology and the regulatory mandates are included in the assessment. For example, the assessment enables determination of process capability and may be employed for identifying GxP risks while delivering value to the organization. Additionally, the assessment enables measurement of the achievement of current or potential new technologies, industry goals, regulatory requirements, benchmarking, consistent reporting, and organizational compliance.

The PRAM module 123 assesses and stratifies risks. In some embodiments, the PRAM module 123 performs risk analysis for identifying risk based compliance controls for the regulatory assessment (e.g., GAMP categories) and its allied compliance mandates using Monte Carlo simulation. The compliance controls include, but are not limited to, regulations, policies, standard operating procedures, work instructions, qualifications, protocols, and organizational structures that may be implemented to reduce risks. It should be noted that the risk analysis may be performed on hypothetical basis to identify interdependencies among the risks and to identify severity of each of the risk. The aligned compliance controls may then be assigned severity as per the outcome of the hypothetical experiments.

In some embodiments, the analysis performed by the PRAM module 123 may be automated with AI methods represented by rule base queries. A contextual query language may be built-in to deploy the Monte Carlo simulation model for performing risk assessment. These queries may be built on ontology language which is a declarative programming used on domain related information processing. Since multi-dimensional queries are deployed, it may be also possible to predict and simulate threats and vulnerable control elements. An automated design test may be carried out using an in-built semantic reasoner to infer logical consequences from a set of asserted guidelines to determine the accuracy and appropriateness of the risk and priority assignment.

The QM predictive and prescriptive analysis module 124 performs predictive analysis by simulating and analyzing behavior of compliance controls and risk parameters. In some embodiments, a Dynamic AI based Fault Tree Analysis (AIFT) may also be programmed in this module 124 so as to perform failure analysis of an undesired state. In other words, positive outcomes and undesirable states may be predicted. It should be noted that predictive analysis is a recursive analysis and the risk based compliance controls for each system in regulatory assessment (e.g., those categorized under GAMP 5 categories) is monitored using cognitive techniques. Additionally, in some embodiments, a Pareto analysis may be performed for prescriptive results. This may provide best alignments as well as the major non-conformities in the systems 100, thereby predicting the future state of compliance.

The Delphi module 125 deploys Delphi method for identifying and prioritizing issues for decision-making. The Delphi module 125 allows human interaction/expert intervention on the system outputs. This module 125 works with multiple modules within the system 100 to verify and validate the AI generated predictive analysis and suggestions.

The knowledge and learning layer 107 stores data received from various modules, components, engines, and processing units of the system 100, and creates the knowledge base by creating different clusters for subsequent use. The system 100 learns with this aggregated knowledge and gets better with time based on the learning.

The user interface 108 is a combination of technologies and devices to provide a platform that enables the users to interact with the system 100. In some embodiments, the user interface 108 provides for efficiency and ease of use for the underlying logical design of the stored program. For example, the user interface 108 may display results of the AI processing and may allow the Delphi module 125 interact with experts so as to adjust decision making parameters. Additionally, the user interface 108 may allow the user to generate reports and display the status of various outputs visually.

It should be noted that the above discussed subsystems, components, engines, modules, etc. may be implemented in programmable hardware devices such as programmable gate arrays, programmable array logic, programmable logic devices, and so forth. Alternatively, the subsystems, components, engines, modules, etc may be implemented in software for execution by various types of processors. An identified engine of executable code may, for instance, include one or more physical or logical blocks of computer instructions which may, for instance, be organized as an object, procedure, function, module, or other construct. Nevertheless, the executables of an identified engine need not be physically located together, but may include disparate instructions stored in different locations which, when joined logically together, include the engine and achieve the stated purpose of the engine. Indeed, an engine of executable code may be a single instruction, or many instructions, and may even be distributed over several different code segments, among different applications, and across several memory devices.

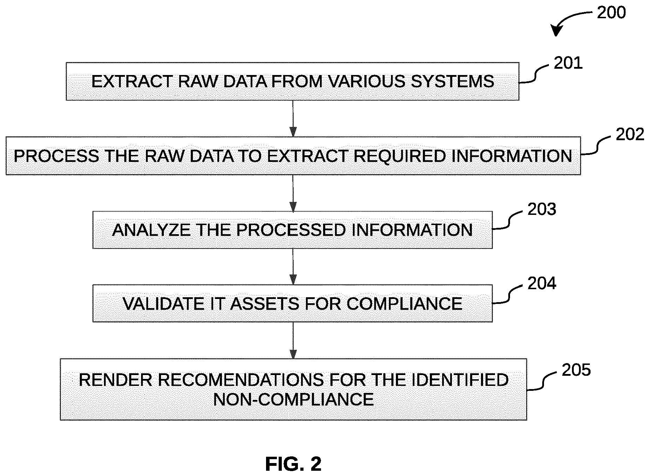

Referring now to FIG. 2, an overview of an exemplary process 200 for validating compliance of an IT asset to a regulatory guideline is depicted via a flowchart in accordance with some embodiments of the present disclosure. The process 200 involves the steps of extracting raw data from the various systems at step 201, processing the raw data for extracting required information at step 202, analyzing the processed information at step 203, validating IT assets for compliance at step 204, and rendering recommendations for the identified non-compliance at step 205. Each of these steps will be described in greater detail herein below.

At step 201, the process 200 establishes connection with different systems and extracts the raw data in parallel from the systems in a non-intrusive and speedy manner. In some embodiments, the transaction layer identifies the different IT systems integrated across the operation systems (e.g., R&D center) and tags them based on their network boundaries, types of operating system employed, authentication mechanisms, and other such parameters. This information resides in the knowledge base repository. The process 200 then connects to the identified IT systems based on the available authentication credentials and automatically retrieves the required information in a speedy manner. It should be noted that, upon considering the network bandwidth and memory available on the identified systems, appropriate changes may be incorporated into the loaded execution which would utilize threading, compression and encryption as need be. In some embodiments, the data (i.e., the required information) may be shared back to the system in parallel (i.e., in real time or in batches) while the data is being read. Alternatively, the data may be shared back to the system after the data has been read (i.e., post-completion basis). After receiving the data, in some embodiments, data parsers may be invoked to decrypt, decompress, restructure based on the action taken while incorporating appropriate changes into the loaded execution. In some embodiments, a base analyzer may identify data elements that match pre-set rules which qualify a non-compliance scenario while the parsing is performed. Finally, the data is forwarded into indexer for indexing and storage, as well as to the knowledge or learning engine so as to create a knowledge database.

At step 202, the process 200 processes the raw data to extract required information (e.g., regulatory parameters) so as to perform assessment of the systems under consideration. In some embodiments, the process 200 obtains different categories by deploying query mechanism based on regulatory guidance, assigns relevant categories for the systems under consideration, and performs design test for the categories and assignment. In some embodiments, the process 200 obtains user confirmation (i.e., manual validation) on the categories and assignment. Thus, in some embodiments, the details of integrated IT systems received from transactional layer is processed by the data integrator, the information integrator, and the regulatory assessor (e.g., GxP assessor such as GAMP 5 category assignor). The identified details (i.e., required information) are then analyzed on several pre-configured parameters using semantic queries. In some embodiments, the semantic queries use the technique of pattern matching to provide a more precise result. It should be noted that, the patterns created here may be the categories of systems as defined by regulatory guidelines (e.g., GxP guidelines). Additionally, information retrieval (IR) query language may be employed along with the semantic queries to retrieve information from the databased and the learning module. The output of the regulatory assessor may be provided to the AI based intelligence processing unit, user interface, and to the knowledge based and learning engine for further processing.

For example, laboratory information management system (LIMS) may be a commercially off the shelf (COTS) product or an internally developed proprietary product that needs to be validated and align to compliance mandates. Now, if the LIMS has been deployed at R&D center for specific use in research and if the organization has its research operations across the globe, then there is an imperative that system has to comply with regulatory norms across various jurisdictions. Thus, to obtain the required information, semantic queries along with information retrieval query language may be deployed which shall process the IT system details and obtain the category assignment.

At step 203, the process 200 analyzes the processed information received from step 202. The processed information received from the regulatory assessor are first analyzed by the IRIA module. In some embodiments, the primary features (e.g., rules, rule base) may be considered. It should be noted that the primary features may be specific to that regulatory assessment (e.g., GAMP 5 category) that the system belongs to, and to the predefined industry specific standards. In some embodiments, a distributed query processing may be deployed in the IRIA module so as to provide distributed concurrent access to multiple data sources. As will be appreciated, such distributed concurrent access enables creation of heterogeneous queries that combines different back end tables to determine the required outcome. For example, a query based search may be triggered to identify sources of compliance information needed for the cluster formed for each :GAMP5 category'. This is done based on a list of rules or a rule base, which is a specific to that GAMP 5 category that the system belongs to.

Additionally, the processed data received from the information integrator and the learning engine is analyzed by the IRIA module. It should be noted that this analysis is completely dynamic and cognitive. Finally, the specific compliance controls for the system (e.g., GxP system) under consideration may be obtained. An automated design test may be carried out using the in-built semantic reasoner to infer logical consequences from a set of asserted guidelines to determine to accuracy and appropriateness of the control and assignment. Upon identification of the control and input by the system, the same is sent to the PRAM module for qualitative analysis.

As stated above, the PRAM module performs risk analysis for identifying controls for the GAMP Category and its allied compliance mandates using Monte Carlo simulation. The compliance controls typically includes, but are not limited to, regulations, policies, standard operating procedures, work instructions, qualifications and its protocols, and organizational structures that are implemented to reduce risks. Similarly the risk analysis may be done on hypothetical basis and the aligned controls are assigned severity as per the outcome of the hypothetical experiments. Thus, the PRAM module performs control prioritization and selection, control assignment and fitment assessment, and control validation. Again, as noted above, the analysis performed by the PRAM module may be automated with AI methods represented by rule base queries. A contextual query language may be built-in to deploy the Monte Carlo simulation model to perform risk assessment. These queries may be built on ontology language which is a declarative programming used on domain related information processing. Since multi-dimensional queries are deployed, it may be possible to predict and simulate threats and vulnerable control elements. An automated design test may be carried out using an in built semantic reasoner to infer logical consequences from a set of asserted guidelines to determine the accuracy and appropriateness of the risk and priority assignment. This is one of the important input to do the QM predictive and prescriptive analysis module. Additionally, the output of this module feeds into the storage, the user interface, and the learning module.

At step 204, the process 200 validates the IT assets of the systems under consideration for compliance. The regulatory assessor extracts details of the integrated IT assets from the IT physical layer and knowledge base, and performs validation based on the regulatory assessment. For example, in some embodiments, the GAMP5 category assignor fetches the requisite data from the IT physical layer and knowledge base, and perform the validation based on identified key categories. The qualification or test scripts may be traced to the requirements and specifications they verify. If the test passes, the executed test script serves as documented evidence that the associated requirements and specifications were met. This way about every aspect of the system may be prospectively validated.

It should be noted that, for a user planning to validate an integrated IT assets of a R&D center, the first step is developing the user requirement specification (URS) document. Development of the URS document is the single most important element of the GAMP process as it initiates the validation process. The URS describes the equipment or system as it is intended to function, and it is typically written by a system user. The software development team translates the URS into a functional and technical design document. The functional specifications correspond to the operational qualifications, which defines the parameters that are to be validated. A master validation plan may then be created using URS.

By way of an example, a type of software employed by the system is determined for categorizing the system. As will be appreciated, categorizing the system helps in writing system documentation that includes specifications, test scripts, qualifications etc. For example, the key categories in regards to monitoring systems may be as follows: Category 3 - Off-the-shelf, Category 4 ⁻ Configured, and Category 5 ⁻ Custom. The major qualifications that are to be performed may be installation qualification (IQ), operational qualification (OQ), and performance qualification (PQ). The installation qualification (IQ) confirms complete documentation including, but not limited to, checking purchase orders, checking proper hardware installation, and performing software verification according to the manufacturer's specifications. It should be noted that both user and supplier share primary testing responsibility. The operational qualification (OQ) confirms the system operations by testing the design requirements that are traced back to the function specifications, including software and hardware functions under normal load, and under realistic stress conditions so as to assess whether equipment and systems are working correctly. Again, it should be noted that both user and supplier share primary testing responsibility. The performance qualification (PQ) confirms that a system is capable of performing or controlling the activities of the process, while operating in a specific environment - namely, a series of checks by the user against the original requirement specifications of the system. It should be noted that testing responsibility falls solely on the user.

At step 205, the process 200 renders preventive measure recommendations for the identified non-compliant IT systems and displays the result. The intelligence processing unit employs an ensemble of supervised as well as unsupervised machine learning methods, a view of Integrated IT system, technology activities considering three dimensions - compliance requirement, jurisdiction specific laws, and time lines, significant activity across the operation center (e.g., R&D center), and known environment specific GxP to perform the qualitative data analysis and run predictive, spatial, and statistical methods as and where required.

It should be noted that the qualitative methods are based on AI and cognitive processing. Thus, the predictive analysis and prescriptive alignment are based on the AI models. In some embodiments, the AI methods are deployed using declarative programming and mathematical modeling. Further, structured query language (SQL) based on relational algebra and tuple calculus may be deployed. SQL consists of data definition language, data manipulation language, and data control language, thereby enabling multi-dimensional and multi-cluster information processing. Additionally, linear regression techniques for multi-regression and Pareto analysis may be employed to calculate the compliance adherence factor and to derive prescriptive results. It should be noted that clustering may be modeled using Abelian group properties. Further, it should be noted that results of the regression analysis with respect to technology, infrastructure, and compliance may enable prediction of incidents and impacts that are yet to happen. As will be appreciated, compliance analysis may be performed on the ontological groups. Thus, predictive and prescriptive results may be derived.

The DELPHI module receives the input from one of the IRIA module, PRAM module, QM predictive and prescriptive analysis module as well as from data integrator, information integrator, the regulatory assessor, and the learning module so as to provide the appropriate recommendation to address non-compliance. After receiving the input, the subject matter expert may provide additional inputs while the information retrieval (IR) query deployed in the DELPHI module may seek additional information on integrated IT assets.

As will be appreciated, in some embodiments, the different categories of risk analysis provided by the intelligence processing unit may be as follows: non-compliance, potential non-compliance, suspicious activity, and informational note. The non-compliance of IT asset may be any inference made using the analysis that matches non-compliance triggers or rule-set. The potential non-compliance of IT asset may be any inference made using the analysis that does not match non-compliance triggers or rule-set but indicates a high potential and resemblance to non-compliance. The suspicious activity may be any inference that falls under patterns of anomalous activities done by users that earlier triggered for potential non-compliance or suspicious categories. The informational note may be any inference that could not be qualified as non-compliance or suspicious categories but are important to be flagged to user for informational purposes.

For each of the different categories identified, the process 200 allows the user to drill down to individual data items to validate, and infer if the observations are valid or if any further details are required. In case the users opts to get additional details, the available information as well as current (real-time) information may be extracted again and made available to the user so as to provide him with informed decision. Any successful or failed identification of non-compliance of IT asset may be used as a feedback to rule-set so as to improve the AI model, and may be considered for subsequent analysis, validation, prediction, and/or recommendations. For example, inferences that were flagged as non-compliance of IT system and proven to be correct post manual verification may be used as feedback to enhance the score and confidence of compliance rule sets. Similarly, any inferences that are proven to be incorrect may be used to refine and underscore the rule sets.

As will be appreciated by one skilled in the art, a variety of processes may be employed for validating compliance of an IT asset to a regulatory guideline. For example, the exemplary validation system 100 may facilitate validation of compliance of the IT asset to a regulatory guideline by the processes discussed herein. In particular, as will be appreciated by those of ordinary skill in the art, control logic and/or automated routines for performing the techniques and steps described herein may be implemented by components of the validation system 100, either by hardware, software, or combinations of hardware and software. For example, a suitable code may be accessed and executed by the one or more processors on the validation system 100 to perform some or all of the techniques described herein. Similarly, application specific integrated circuits (ASICs) configured to perform some or all of the processes described herein may be included in the one or more processors on the system 100.

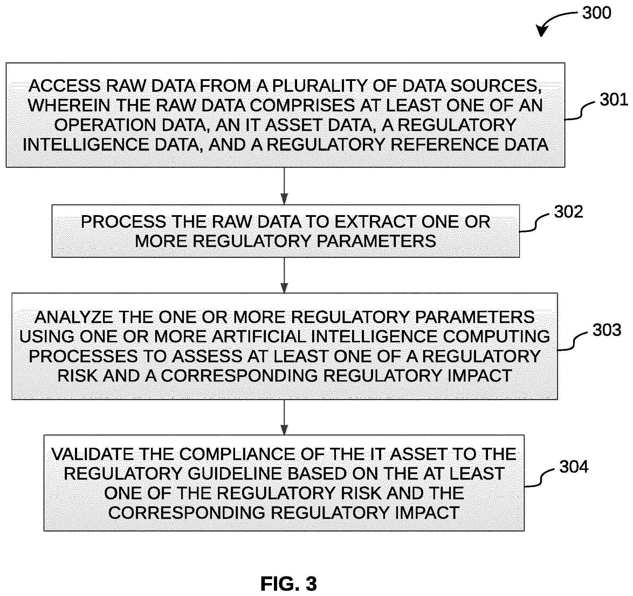

For example, referring now to **FIG. 3****,** exemplary control logic 300 for validating compliance of an IT asset of an organization to a regulatory guideline via a system, such as the validation system 100, is depicted via a flowchart, in accordance with some embodiments of the present disclosure. As illustrated in the flowchart, the control logic 300 includes the steps of accessing raw data from a plurality of data sources at step 301, processing the raw data to extract one or more regulatory parameters at step 302, analyzing the one or more regulatory parameters using one or more artificial intelligence computing processes to assess at least one of a regulatory risk and a corresponding regulatory impact at step 303, and validating the compliance of the IT asset to the regulatory guideline based on the at least one of the regulatory risk and the corresponding regulatory impact at step 304. It should be noted that the raw data comprises at least one of an operation data, an IT asset data, a regulatory intelligence data, and a regulatory reference data.

In some embodiments, the operation data comprises at least one of a socioeconomic data, a biomedical data, a genetic data, an environmental data, a medical data, a clinical research data, a financial data, and an expense data. Additionally, in some embodiments, the IT asset data comprises at least one of a type of operating system, a proprietary computing process, a third-party computing process, a database, an information security process, an information backup process, a network infrastructure, and a storage infrastructure. Further, in some embodiments, the IT asset comprises at least one of a research and development system, a laboratory information management system, a regulatory submission and management system, a technical operation system, a manufacturing execution system, an enterprise resource planning system, a quality management system, a sales and marketing system, a promotion compliance system, a finance system, a legal system, and a customer engagement system.

In some embodiments, the regulatory intelligence data comprises information with respect to change in at least one of a law, a regulation, a directive, and a guidance in an industrial sector to which the organization belongs. Additionally, in some embodiments, the regulatory reference data comprises at least one of a good automated manufacturing practice (GAMP) guideline, a food and drug administration (FDA) guideline, an international standard organization (ISO) guideline, and an international council on harmonization of technical requirements for registration of pharmaceuticals for human use (ICH) guideline.

In some embodiments, processing the raw data at step 302 comprises integrating the raw data from the plurality of data sources by at least one of a correction and a normalization, and correlating the integrated data to extract the one or more regulatory parameters. In some embodiments, the control logic 300 further includes the step of indexing the one or more regulatory parameters, and storing the one or more indexed regulatory parameters for subsequent search and retrieval. Additionally, in some embodiments, the control logic 300 further includes the step of ranking the one or more regulatory parameters based on at least one of a geographical risk, a type of risk according to the regulatory guideline, a number of incidents corresponding to the IT asset, and a historical compliance detail of the IT asset.

In some embodiments, processing the raw data at step 302 comprises performing a regulatory assessment of the raw data based on at least one of a technology, an industry requirement, an intent of use, and a criticality. Additionally, in some embodiments, the control logic 300 further includes the step of presenting the regulatory assessment for manual validation. Further, in some embodiments, the regulatory guideline comprises a good automated manufacturing practice (GAMP) guideline and performing the regulatory assessment comprises determining at least one of a GAMP category of the IT asset.

In some embodiments, analyzing the one or more regulatory parameters at step 303 comprises performing a qualitative assessment of the one or more regulatory parameters based on a set of rules. Additionally, in some embodiments, analyzing the one or more regulatory parameters at step 303 comprises deriving at least one of a risk mitigation strategy based on the at least one of the regulatory risk and the corresponding regulatory impact for compliance control. In some embodiments, the at least one of the risk mitigation strategy comprises at least one of a regulation, a policy, a standard operating procedure, a work instruction, a qualification, a protocol, and an organizational structure. Additionally, in some embodiments, the control logic 300 further includes the step of rendering recommendations based on the at least one of the risk mitigation strategy for an identified non-compliance upon validation at step 304. Moreover, in some embodiments, analyzing the one or more regulatory parameters at step 303 comprises performing a predictive analysis of the one or more regulatory parameters to assess at least one of a potential regulatory risk, derive at least one of a corresponding risk mitigation strategy for the at least one of the potential regulatory risk, and validate the at least one of the potential regulatory risk and the at least one of the corresponding risk mitigation strategy.

As will be also appreciated, the above described techniques may take the form of computer or controller implemented processes and apparatuses for practicing those processes. The disclosure can also be embodied in the form of computer program code containing instructions embodied in tangible media, such as floppy diskettes, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

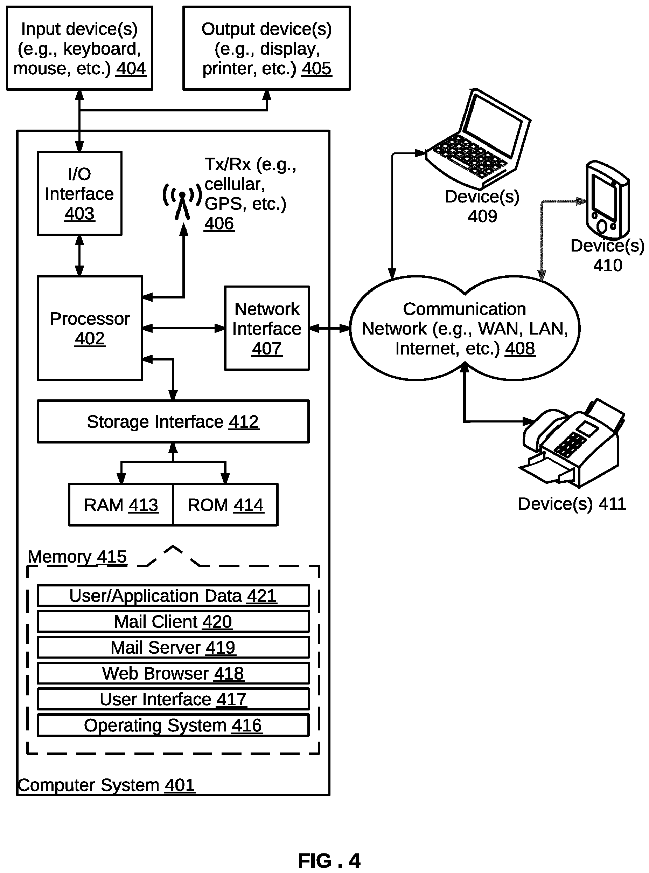

The disclosed methods and systems may be implemented on a conventional or a general-purpose computer system, such as a personal computer (PC) or server computer. Referring now to **FIG. 4****,** a block diagram of an exemplary computer system 401 for implementing embodiments consistent with the present disclosure is illustrated. Variations of computer system 401 may be used for implementing components of validation system 100 for validating compliance of an IT asset to a regulatory guideline. Computer system 401 may include a central processing unit ('CPU_ or 'processor_) 402. Processor 402 may include at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 402 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 402 may be disposed in communication with one or more input/output (I/O) devices via I/O interface 403. The I/O interface 403 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 403, the computer system 401 may communicate with one or more I/O devices. For example, the input device 404 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 405 may be a printer, fax machine, video display (e.g., cathode ray tube (CRT), liquid crystal display (LCD), light-emitting diode (LED), plasma, or the like), audio speaker, etc. In some embodiments, a transceiver 406 may be disposed in connection with the processor 402. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 402 may be disposed in communication with a communication network 408 via a network interface 407. The network interface 407 may communicate with the communication network 408. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 808 may include, without limitation, a direct interconnection, local area network (LAN), wide area network (WAN), wireless network (e.g., using Wireless Application Protocol), the Internet, etc. Using the network interface 407 and the communication network 408, the computer system 401 may communicate with devices 409, 410, and 411. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 401 may itself embody one or more of these devices.

In some embodiments, the processor 402 may be disposed in communication with one or more memory devices (e.g., RAM 413, ROM 414, etc.) via a storage interface 412. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 416, user interface application 417, web browser 418, mail server 419, mail client 420, user/application data 421 (e.g., any data variables or data records discussed in this disclosure), etc. The operating system 416 may facilitate resource management and operation of the computer system 401. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 417 may facilitate display, execution, interaction, manipulation, or operation of program components through textual or graphical facilities. For example, user interfaces may provide computer interaction interface elements on a display system operatively connected to the computer system 401, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 401 may implement a web browser 418 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 401 may implement a mail server 419 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 401 may implement a mail client 420 stored program component. The mail client may be a mail viewing application, such as Apple Mail, Microsoft Entourage, Microsoft Outlook, Mozilla Thunderbird, etc.

In some embodiments, computer system 401 may store user/application data 421, such as the data, variables, records, etc. (e.g., raw data, operation data, IT asset data, regulatory intelligence data, regulatory reference data, regulatory guidelines, regulatory assessment, regulatory parameters, GAMP categories, regulatory risk, regulatory impact, integrated data, correlated data, indexed data, ranked data, risk mitigation strategy, standard operating procedure, a work instruction, preventive measure recommendations, and so forth) as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

As will be appreciated by those skilled in the art, the techniques, described in the various embodiments discussed above, provide for validation of compliance of IT systems of an organization to various regulatory guidelines. For example, the techniques provide for validation of compliance adherence of IT systems integrated into R&D center of a life science organization as per GAMP5 guidelines, industry specific standards, regulations, rules and laws. The techniques classify the IT asset according to GAMP 5 requirements and assign compliance requirements and controls for all integrated IT assets. Additionally, the techniques described in the various embodiments discussed above provide for compliance control, risk mitigation strategies, and preventive measure recommendations for identified risks. The techniques therefore ensure the quality of the product manufactured or service delivered.

The techniques described in the embodiments discussed above access compliance requirement from systems in an automated manner. The techniques further perform regulatory assessments, identify applicable rules, regulations, statutes, functions, and processes, determine the compliance-criticality of functions and processes, and identify threats to ongoing compliance and vulnerability to systems. It should be noted that the techniques described above are non-intrusive to user activities and generate faster results. The use of systems-functions and smart carving techniques reduces the time taken to identify information.

The techniques further described in the embodiments discussed above further employ artificial Intelligence (AI) and other aggregating techniques to summarize information and infer intelligence. The techniques adopts indexing to provide for storage of large amount of data which may then be queried in an ad-hoc and real-time manner. The AI methods in the systems is designed to take over the tasks of initiating controls and then qualifying, monitoring, and sustaining :cognitive compliance. As will be appreciated, the techniques described in the embodiments discussed above, may also be employed (with or without minor modifications) to parse natural language to understand questions, to handle multiple questions simultaneously, and to process multiple languages.

The specification has described system and method for validating compliance of an IT asset of an organization to a regulatory guideline. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term 'computer-readable medium_ should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for validating compliance of an information technology (IT) asset of an organization to a regulatory guideline, the method comprising:
accessing, by a validation system, raw data from a plurality of data sources, wherein the raw data comprises at least one of an operation data, an IT asset data, a regulatory intelligence data, and a regulatory reference data;
processing, by the validation system, the raw data to extract one or more regulatory parameters;
analyzing, by the validation system, the one or more regulatory parameters using one or more artificial intelligence computing processes to assess at least one of a regulatory risk and a corresponding regulatory impact; and
validating, by the validation system, the compliance of the IT asset to the regulatory guideline based on the at least one of the regulatory risk and the corresponding regulatory impact.

2. The method of claim 1, wherein the operation data comprises at least one of a socioeconomic data, a biomedical data, a genetic data, an environmental data, a medical data, a clinical research data, a financial data, and an expense data.

3. The method of claim 1 or 2, wherein the IT asset data comprises at least one of a type of operating system, a proprietary computing process, a third-party computing process, a database, an information security process, an information backup process, a network infrastructure, and a storage infrastructure, and wherein the IT asset comprises at least one of a research and development system, a laboratory information management system, a regulatory submission and management system, a technical operation system, a manufacturing execution system, an enterprise resource planning system, a quality management system, a sales and marketing system, a promotion compliance system, a finance system, a legal system, and a customer engagement system.

4. The method of claim 1, 2, or 3, wherein the regulatory intelligence data comprises information with respect to change in at least one of a law, a regulation, a directive, and a guidance in an industrial sector to which the organization belongs.

5. The method of any preceding claim, wherein the regulatory reference data comprises at least one of a good automated manufacturing practice (GAMP) guideline, a food and drug administration (FDA) guideline, an international standard organization (ISO) guideline, and an international council on harmonization of technical requirements for registration of pharmaceuticals for human use (ICH) guideline.

6. The method of any preceding claim, wherein processing the raw data comprises:
integrating the raw data from the plurality of data sources by at least one of a correction and a normalization; and
correlating the integrated data to extract the one or more regulatory parameters;
and optionally further comprising:
indexing the one or more regulatory parameters; and
storing the one or more indexed regulatory parameters for subsequent search and retrieval.

7. The method of claim 6, further comprising:
ranking the one or more regulatory parameters based on at least one of a geographical risk, a type of risk according to the regulatory guideline, a number of incidents corresponding to the IT asset, and a historical compliance detail of the IT asset.

8. The method of any preceding claim, wherein processing the raw data comprises performing a regulatory assessment of the raw data based on at least one of a technology, an industry requirement, an intent of use, and a criticality;
and optionally further comprising:
presenting the regulatory assessment for manual validation.

9. The method of any preceding claim, wherein analyzing the one or more regulatory parameters comprises performing a qualitative assessment of the one or more regulatory parameters based on a set of rules.

10. The method of any preceding claim, wherein analyzing the one or more regulatory parameters comprises deriving at least one of a risk mitigation strategy based on the at least one of the regulatory risk and the corresponding regulatory impact for compliance control.

11. The method of claim 10, wherein the at least one of the risk mitigation strategy comprises at least one of a regulation, a policy, a standard operating procedure, a work instruction, a qualification, a protocol, and an organizational structure.

12. The method of claim 10 or 11, further comprising:
rendering recommendations based on the at least one of the risk mitigation strategy for an identified non-compliance upon validation.

13. The method of any preceding claim, wherein analyzing the one or more regulatory parameters comprises performing a predictive analysis of the one or more regulatory parameters to:
assess at least one of a potential regulatory risk;
derive at least one of a corresponding risk mitigation strategy for the at least one of the potential regulatory risk; and
validate the at least one of the potential regulatory risk and the at least one of the corresponding risk mitigation strategy.

14. A system for validating compliance of an information technology (IT) asset of an organization to a regulatory guideline, the system comprising:
at least one processor; and
a memory for storing instructions that, when executed by the at least one processor, cause the at least one processor to perform operations comprising the method of any preceding claim.

15. A non-transitory computer-readable medium storing instructions for validating compliance of an information technology (IT) asset of an organization to a regulatory guideline, wherein upon execution of the instructions by one or more processors, the processors perform operations comprising the method of any of claims 1 - 13.
